# EUROPEAN PATENT SPECIFICATION

(11) **EP 1 754 316 B1**
(45) Date of publication and mention of the grant of the patent: **08.06.2016**
(21) Application number: 05744894.6
(22) Date of filing: 27.04.2005
(51) Int. Cl.: H01R 24/00, H01R 13/6464, H01R 13/719, H04B 3/32, G01R 27/26

(54) **FEXT CANCELLATION OF MATED RJ45 INTERCONNECT**
FEXT-AUFHEBUNG EINER VERBUNDENEN RJ45-VERBINDUNG
ANNULATION DE TÉLÉDIAPHONIE D'UNE INTERCONNEXION RJ45 ACCOUPLÉE

(30) Priority: 27.04.2004 US 833639; 03.05.2004 US 568100 P
(43) Date of publication of application: 21.02.2007
(73) Proprietor: FLUKE CORPORATION, Everett Washington 98203 (US)
(72) Inventor: JACKSON, Robert, J., Monroe, WA 98272 (US)
(74) Representative: Hargreaves, Timothy Edward
(86) International application number: PCT/US2005/014642
(87) International publication number: WO 2005/104782

(56) References cited:
- WO-A-02/15345
- US-A- 5 634 817
- US-A- 5 997 358
- US-A- 6 089 923
- US-A1- 2001 000 424
- US-A1- 2004 033 728

## Description

### Background of the Invention

This invention relates to network testing, and more particularly to a method and apparatus for canceling Far End Cross Talk (FEXT) in an interconnection.

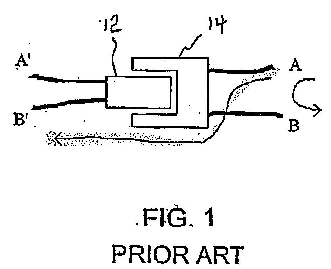

Referring to FIG. 1, a representation of a typical plug/jack combination illustrating a NEXT and FEXT component, a plug 12 interfaces signal ports A' and B' to signal ports A and B via jack 14. Referring to a single signal source, Near End Cross Talk (NEXT) is energy from a signal source at port A that is coupled to port B, while Far End Cross Talk (FEXT) is energy from the signal source on port A that is coupled to port B'.

In design of connector jacks, such as an RJ45 jack, for example, the typical goal of a jack designer is to optimize the properties of the jack to minimize return loss, Near End Cross Talk (NEXT) loss and Far End Cross Talk (FEXT) loss. However, because of the interrelated nature of these properties, maximum cancellation of any given parameter is not achieved.

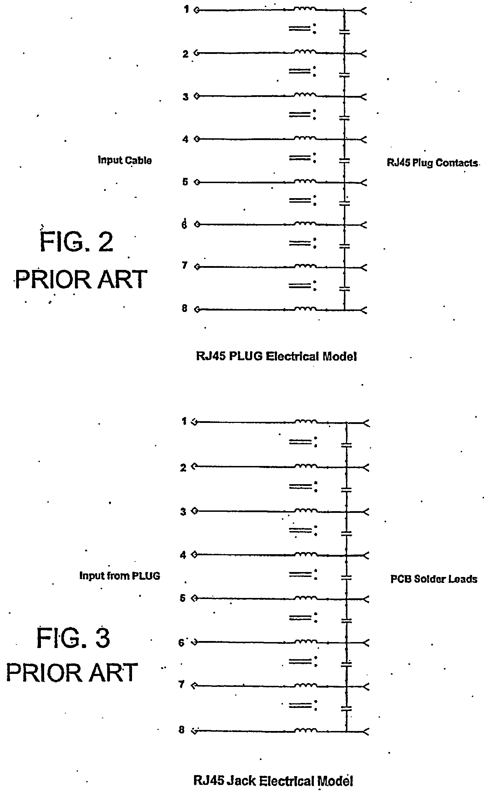

An electrical model of a typical RJ45 plug and of a typical RJ45 jack are show in FIG. 2 and FIG. 3, respectively. The plug consists of 8 connectors, receiving an input cable and providing plug contacts, while the jack has corresponding inputs that connect with the plug contacts and solder leads for soldering to a printed circuit board. The various adjacent lines are mutually inductive and mutually capacitive with their adjacent lines.

US 5,532,603 describes a pulse-based cable crosstalk measurement instrument which provides near end crosstalk (NEXT) information for characterizing the performance of local area network cable systems. Accuracy of the crosstalk measurement is enhanced by measuring and mathematically removing the crosstalk effects of the near end connector. For calculation purposes a microprocessor, especially a signal processor, is used.

WO 02,15345 A1 employs the mechanical layout in configuration of the connectors to attempt reduction of crosstalk.

US 2001/0000424 A1 describes a test unit for measuring crosstalk in twisted pair cable. To minimize deviation of OSB (Output Signal Balance) and CMR (Common Mode Rejection) from the perfect or ideal conditions of equal amplitude and opposite phase, this document suggests a test unit which comprises a plurality of pairs of output terminals, each pair of output terminals having a first terminal with a first parasitic capacitance and a second terminal with a second parasitic capacitance. A first variable capacitor is connected in circuit with said first terminal to form a first effective capacitance value including said first parasitic capacitance, while a second variable capacitor is connected in circuit with said second terminal to form a second effective capacitance value including said second parasitic capacitance. It further comprises a controller for setting said first variable capacitor to a first predetermined value and said second variable capacitor to a second predetermined value. The first predetermined value and the second predetermined value are selected such that said first effective capacitance value is substantially equal to the second effective capacitance value.

US 5,997,358 deals with the compensation of NEXT. For this purpose an electrical connector is provided for providing predetermined amounts of compensating signals to approximately cancel a like amount of an offending signal at a given frequency. For this purpose the connector includes first and second pairs of metallic conductors that are adjacent to each other and form an interconnection path between input and output terminals. The connector further includes a first compensation stage that is positioned at a first effective location along the interconnection path, wherein compensating signals having a first magnitude of polarity are coupled between the pairs. It further provides a second compensation stage that is positioned at a second effective location along the interconnection path, wherein a compensating signal having a second magnitude and polarity is coupled between the pairs, wherein the first and second polarities are opposite to each other. Furthermore, the first and second effective locations are time-delayed with respect to each other in order to provide predetermined phase shifts at a given frequency between the offending signal and each of the compensating signals.

EP 0 985 933 A2 describes a method and apparatus to measure far end crosstalk for the determination of equal level far end crosstalk. In this context a system for determining FEXT and ELFEXT of a generic cabling system is described which provides accurate measurement of these parameters by determining and removing the effect of the connectors at the respective ends of the link. This allows to provide measurement values that correspond to the defined link rather than including the crosstalk contributions of the connectors which can be substantial.

US 6,356,162 B1 describes an improved interconnect system including a cable and connectors in which stray reactances and crosstalk are compensated for. In detail it provides a compensating reactance configured as n-network connected in one conductor of a first pair of conductors built into another one or more of the cable, the plug and the jack.

### Summary of the Invention

In accordance with the invention, FEXT signal components are canceled at a connector plug/jack combination in order to achieve minimum FEXT.

Accordingly, it is an object of the present invention to provide an improved test instrument that effectively cancels FEXT signal components at the instrument connector.

It is a further object of the present invention to provide an improved method to perform NEXT measurements by eliminating reflected FEXT signals from the measurements.

This task is solved by a method of operating a testing instrument having the features of patent claim 1 and by a testing instrument with the features of patent claim 6.

The subject matter of the present invention is particularly pointed out and distinctly claimed in the concluding portion of this specification. However, both the organization and method of operation, together with further advantages and objects thereof, may best be understood by reference to the following description taken in connection with accompanying drawings wherein like reference characters refer to like elements.

### Brief Description of the Drawings

FIG. 1 is a representation of a typical plug/jack combination illustrating a NEXT and FEXT component;
FIG. 2 is a circuit diagram illustrating the electrical model of an RJ45 plug;
FIG. 3 is a circuit diagram illustrating the electrical model of an RJ45 jack;
FIG. 4 is a circuit diagram of an FEXT compensation circuit in accordance with the invention;
FIG. 5 is a diagram of a test instrument implementing the invention; and
FIG. 6 illustrates a particular PCB trace configuration that is employed in connection with a PCB implementation of the mutual inductances.

### Detailed Description

The system according to a preferred embodiment of the present invention comprises an implementation of a test instrument for performing test and measurement operations.

The invention provides an improved test instrument that effectively cancels FEXT signal components at the instrument connector. Reflected energy from the link-under-test is coupled into the receiving signal path by FEXT occurring in the instrument connector. The "reflected FEXT" energy component is an error component in the NEXT measurement of the link.

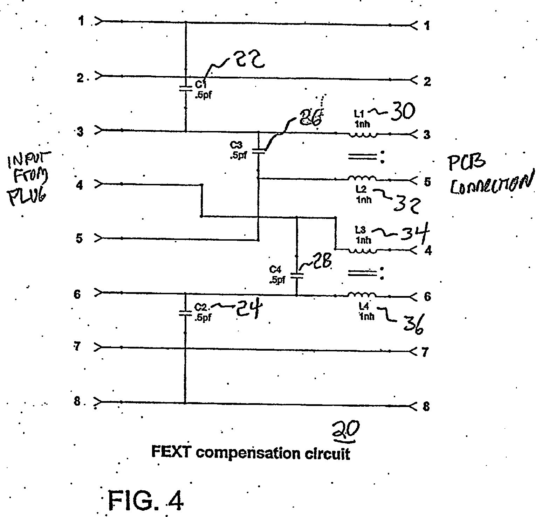

Referring to FIG. 4, a circuit diagram of an FEXT compensation circuit in accordance with the invention, the preferred embodiment of the invention is implemented in a test and measurement instrument for use with networking. The instrument has an RJ45 jack therein to receive a corresponding RJ45 plug, to connect to a network cable. In order to minimize FEXT, a compensation circuit 20 is provided. In FIG. 4, the compensation circuit is described with respect to the 36-45 pair combination, but corresponding techniques are employed with respect to other signal pairs.

In the view of FIG. 4, the input from the jack is on the left side, while the right side is the continuation of the printed circuit board connection. Shown are connector lines 1-8, wherein capacitors 22 (C1), 24 (C2), 26 (C3) and 28 (C4) couple lines 1-3, 6-8, 3-5 and 4-6, respectively. An inductor 30 (L1) is serially interposed between the input from plug and PCB side of conductor 3, capacitor 26 being connected at the plug input side of inductor 30. A second mutual (relative to inductor 30) inductor 32 (L2) connects to capacitor 26 at the line 5 plug input end thereof, while the opposite end of inductor 32 connects to the PCB side of the instrument. A corresponding mutual inductor pair 34 (L3) and 36 (L4) are supplied serially between the conductor 4 plug input/conductor 4 PCB connection (inductor 34) and between the conductor 6 plug input/conductor 6 PCB connection (inductor 36). The jack input side of inductor 34 connects to the conductor 4 end of capacitor 28, while the jack input side of inductor 36 connects to the opposite, line 6 end of capacitor 28. Capacitor 24 is also suitably connected at the jack input side of inductor 36.

In operation of a typical RJ45 jack/plug combination, signal pairs are configured as follows, pair 1 comprises lines 1 and 2, pair 2 comprises lines 3 and 6, pair 3 comprises lines 4 and 5 and pair 4 comprises lines 7 and 8. Energy is coupled from signal lines 3 to 4 and signal lines 5 to 6 through the adjacent mutual inductances and adjacent capacitances that are inherent to the physical construction of RJ45 plugs and jacks. In accordance with the invention, the compensation circuit of FIG. 4 operates to reverse the phase of the coupling by placing mutual inductance of inductors 30, 32 and capacitance of capacitor 26 between signal lines 3 to 5 and by placing mutual inductance of inductors 30, 32 and capacitance of capacitor 26 between signal lines 3 to 5, an by placing mutual inductance of inductors 34, 36 and capacitance of capacitor 28 between signal lines 4 and 6. FEXT cancellation is achieved by the inclusion of anti-phase inductive coupling of inductors 30 to 32 and inductors 34 to 36, while the capacitors 22, 24, 26 and 28 help to mitigate overall NEXT response.

While the implementation of the invention is described hereinabove with respect to signal pair combination 3-6 and 4-5, corresponding compensation strategies are employable with respect to any pair combination. In a typical RJ45 interconnection, the most important signals are 1-2 to 3-6, 3-6 to 4-5 and 3-6 to 7-8.

The preferred embodiment of the invention implements the mutual inductances 30/32 and 34/36 by providing the inductances formed as layers/traces of a printed circuit board. However, this is not a requirement, and an alternative embodiment can employ discrete transformers or other components for some or all of the mutual inductances.

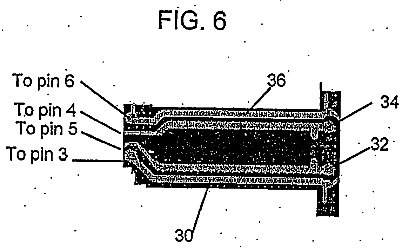

FIG. 6 is an exemplary PCB trace configuration for implementing the inductances 30/32 and 34/36 on a printed circuit board rather than as discrete components.

In a particular embodiment, capacitors 22, 24, 26 and 28 have a value of 0.5pf, while inductors 30, 32, 34 and 36 are 1.0nh. A preferred jack in a particular embodiment comprises a Molex Inverted Modular RJ45 PCB mount jack, while preferred plugs are AVAYA CAT6 RJ45 plugs, or Fluke Networks PM06 test plugs. Other jack/plug combinations may be employed, and specific values for inductors 30-36 and capacitors 22-28 may be varied to further optimize performance for a specific other jack/plug combination. Category 6 (CAT6) plugs have precisely defined properties as established by the Telecommunications Industry Association, which enables interoperability between different manufacturers of CAT6 RJ45 plugs.

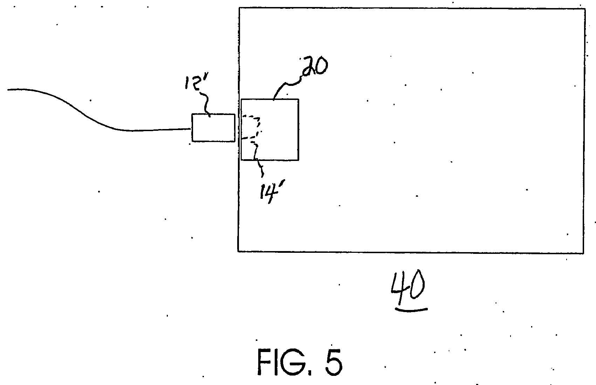

The invention is suitably implemented as a component of a test instrument for network testing. FIG. 5 illustrates a block diagram of the instrument 40, wherein the plug 12' is received by the instrument via jack 14' (not shown) which is designed into the measurement instrument, where the plug/jack are CAT6 RJ45 plug/jack components, to the compensation circuit 20. The instrument is a hand held device in the preferred embodiment.

The invention thus achieves extreme FEXT cancellation in accordance with the illustrated embodiment in a RJ45 plug/jack interconnect. The particular configuration can result, however, in a tradeoff of increased plug/jack NEXT. However, NEXT can be readily factored out by a test instrument employing software techniques. Therefore, by compensating for FEXT with a hardware technique as discussed herein, measurement of network parameters may be more accurately accomplished.

The use of the FEXT cancellation in conjunction with the techniques to remove NEXT, such as those described in U.S. Patent 5,532, 603, CROSS-TALK MEASUREMENT APPARATUS WITH NEAR-END COMPENSATION, allows achievement of a high quality measurement port for a certification instrument. The FEXT cancellation method and apparatus is beneficial because it corrects reflected energy from coupling back into a NEXT measurement of the link-under-test.

While a preferred embodiment of the present invention has been shown and described, it will be apparent to those skilled in the art that many changes and modifications may be made without departing from the invention as claimed.

## Claims

1. A method of operating a test instrument (40) to compensate for near end cross talk (NEXT) and far end cross talk (FEXT) in measurement signals under test provided by a connector (14) comprising a first (1), a second (2), a third (3), a fourth (4), a fifth (5), a sixth (6), a seventh (7) and a eighth signal line (8), comprising the step of compensating for NEXT by use of software techniques, **characterized in that** it further comprises the step of compensating for FEXT by use of a hardware technique, the compensating for FEXT by use of a hardware technique comprising performing the following steps:
providing a first capacitance (22) connected between the first (1) and the third (3) of said signal lines (1 to 8);
providing a second capacitance (24) connected between the sixth (6) and the eighth (8) of said signal lines (1 to 8);
providing a third capacitance (26) connected between the third (3) and the fifth (5) of said signal lines (1 to 8);
providing a fourth capacitance (28) connected between the fourth (4) and the sixth (6) of said signal lines (1 to 8);
providing a first inductance (30) in series between an input and output of said third signal line (3);
providing a second inductance (32) in series between an input and output of said fifth signal line (5);
providing a third inductance (34) in series between an input and output of said fourth signal line (4); and
providing a fourth inductance (36) in series between an input and output of said sixth signal line (6).

2. The method according to claim 1, wherein at least one of said first, second, third or fourth inductances comprises 1 nh.

3. The method according to claim 1 or 2, wherein at least one of said first, second, third or fourth capacitances comprises 0.5 pF.

4. The method according to one of the preceding claims, wherein said compensating for FEXT by use of a hardware technique comprises providing a mutual inductance between the third signal line (3) and fifth signal line (5), and providing a mutual inductance between the fourth signal line (4) and sixth signal line (6).

5. The method according to one of the preceding claims,
wherein said inductances comprise inductances formed as traces on a printed circuit board.

6. A test instrument (40) comprising:
a connector (14) comprising a first (1), a second (2), a third (3), a fourth (4), a fifth (5), a sixth (6), a seventh (7) and a eighth signal line (8), and
a compensation circuit for compensating for NEXT by use of software techniques, **characterized in that** it further comprises:
a compensation circuit for compensating for FEXT by use of hardware technique that hardware technique comprises:
a first capacitance (22) connected between the first (1) and the third (3) of said signal lines (1 to 8);
a second capacitance (24) connected between the sixth (6) and the eighth (8) of said signal lines (1 to 8);
a third capacitance (26) connected between the third (3) and the fifth (5) of said signal lines (1 to 8);
a fourth capacitance (28) connected between the fourth (4) and the sixth (6) of said signal lines (1 to 8);
a first inductance (30) in series between an input and output of said third signal line (3);
a second inductance (32) in series between an input and output of said fifth signal line (5);
a third inductance (34) in series between an input and output of said fourth signal line (4); and
a fourth inductance (36) in series between an input and output of said sixth signal line (6),
wherein the first inductance (30) and the second inductance (32) are provided as a mutual inductance and the third inductance (34) and the fourth inductance (36) are provided as a mutual inductance.

## Patentansprüche

1. Verfahren zum Betreiben eines Prüfinstruments (40) zum Kompensieren von Nahnebensprechen (NEXT) und Fernnebensprechen (FEXT) in zu prüfenden Messsignalen, die von einem Verbinder (14) bereitgestellt werden, der eine erste (1), eine zweite (2), eine dritte (3), eine vierte (4), eine fünfte (5), eine sechste (6), eine siebte (7) und eine achte (8) Signalleitung umfasst, das den Schritt des Kompensierens von NEXT mittels Software-Techniken beinhaltet, **dadurch gekennzeichnet, dass** es ferner den Schritt des Kompensierens von FEXT mittels einer Hardware-Technik beinhaltet, wobei das Kompensieren von FEXT mittels einer Hardware-Technik das Ausführen der folgenden Schritte beinhaltet:
Bereitstellen einer ersten Kapazität (22), die zwischen der ersten (1) und der dritten (3) der Signalleitungen (1 bis 8) geschaltet ist;
Bereitstellen einer zweiten Kapazität (24), die zwischen der sechsten (6) und der achten (8) der Signalleitungen (1 bis 8) geschaltet ist;
Bereitstellen einer dritten Kapazität (26), die zwischen der dritten (3) und der fünften (5) der Signalleitungen (1 bis 8) geschaltet ist;
Bereitstellen einer vierten Kapazität (28), die zwischen der vierten (4) und der sechsten (6) der Signalleitungen (1 bis 8) geschaltet ist;
Bereitstellen einer ersten Induktivität (30) in Serie zwischen einem Eingang und einem Ausgang der dritten Signalleitung (3);
Bereitstellen einer zweiten Induktivität (32) in Serie zwischen einem Eingang und einem Ausgang der fünften Signalleitung (5);
Bereitstellen einer dritten Induktivität (34) in Serie zwischen einem Eingang und einem Ausgang der vierten Signalleitung (4); und
Bereitstellen einer vierten Induktivität (36) in Serie zwischen einem Eingang und einem Ausgang der sechsten Signalleitung (6).

2. Verfahren nach Anspruch 1, wobei wenigstens eine der ersten, zweiten, dritten oder vierten Induktivität 1 nh umfasst.

3. Verfahren nach Anspruch 1 oder 2, wobei wenigstens eine der ersten, zweiten, dritten oder vierten Kapazität 0,5 pF umfasst.

4. Verfahren nach einem der vorherigen Ansprüche, wobei das Kompensieren von FEXT mittels einer Hardware-Technik das Bereitstellen einer gegenseitigen Induktivität zwischen der dritten Signalleitung (3) und der fünften Signalleitung (5) und das Bereitstellen einer gegenseitigen Induktivität zwischen der vierten Signalleitung (4) und der sechsten Signalleitung (6) beinhaltet.

5. Verfahren nach einem der vorherigen Ansprüche, wobei die Induktivitäten Induktivitäten umfassen, die als Bahnen auf einer Leiterplatte ausgebildet sind.

6. Prüfinstrument (40), das Folgendes umfasst:
einen Verbinder (14), der eine erste (1), eine zweite (2), eine dritte (3), eine vierte (4), eine fünfte (5), eine sechste (6), eine siebte (7) und eine achte Signalleitung (8) umfasst, und
eine Kompensationsschaltung zum Kompensieren von NEXT mittels Software-Techniken, **dadurch gekennzeichnet, dass** es ferner Folgendes umfasst:
eine Kompensationsschaltung zum Kompensieren von FEXT mittels einer Hardware-Technik, die Folgendes beinhaltet:
eine erste Kapazität (22), die zwischen der ersten (1) und der dritten (3) der Signalleitungen (1 bis 8) geschaltet ist;
eine zweite Kapazität (24), die zwischen der sechsten (6) und der achten (8) der Signalleitungen (1 bis 8) geschaltet ist;
eine dritte Kapazität (26), die zwischen der dritten (3) und der fünften (5) der Signalleitungen (1 bis 8) geschaltet ist;
eine vierte Kapazität (28), die zwischen der vierten (4) und der sechsten (6) der Signalleitungen (1 bis 8) geschaltet ist;
eine erste Induktivität (30) in Serie zwischen einem Eingang und einem Ausgang der dritten Signalleitung (3);
eine zweite Induktivität (32) in Serie zwischen einem Eingang und einem Ausgang der fünften Signalleitung (5);
eine dritte Induktivität (34) in Serie zwischen einem Eingang und einem Ausgang der vierten Signalleitung (4); und
eine vierte Induktivität (36) in Serie zwischen einem Eingang und einem Ausgang der sechsten Signalleitung (6),
wobei die erste Induktivität (30) und die zweite Induktivität (32) als gegenseitige Induktivität bereitgestellt werden und die dritte Induktivität (34) und die vierte Induktivität (36) als gegenseitige Induktivität bereitgestellt werden.

## Revendications

1. Procédé d'exploitation d'un instrument d'essais (40) pour compenser une paradiaphonie (NEXT) et une télédiaphonie (FEXT) dans des signaux de mesure en cours d'essai fournis par un connecteur (14) comprenant une première (1), une deuxième (2), une troisième (3), une quatrième (4), une cinquième (5), une sixième (6), une septième (7) et une huitième ligne d'acheminement de signaux (8), comprenant l'étape consistant à compenser la paradiaphonie « NEXT » en faisant appel à des techniques logicielles, **caractérisé en ce qu'**il comprend en outre l'étape consistant à compenser la télédiaphonie « FEXT » en faisant appel à une technique matérielle, la compensation de la télédiaphonie « FEXT » en faisant appel à une technique matérielle comprenant la mise en oeuvre des étapes ci-dessous consistant à :
fournir une première capacité (22) connectée entre la première (1) et la troisième (3) desdites lignes d'acheminement de signaux (1 à 8) ;
fournir une deuxième capacité (24) connectée entre la sixième (6) et la huitième (8) desdites lignes d'acheminement de signaux (1 à 8) ;
fournir une troisième capacité (26) connectée entre la troisième (3) et la cinquième (5) desdites lignes d'acheminement de signaux (1 à 8) ;
fournir une quatrième capacité (28) connectée entre la quatrième (4) et la sixième (6) desdites lignes d'acheminement de signaux (1 à 8) ;
fournir une première inductance (30) en série entre une entrée et une sortie de ladite troisième ligne d'acheminement de signaux (3) ;
fournir une deuxième inductance (32) en série entre une entrée et une sortie de ladite cinquième ligne d'acheminement de signaux (5) ;
fournir une troisième inductance (34) en série entre une entrée et une sortie de ladite quatrième ligne d'acheminement de signaux (4) ; et
fournir une quatrième inductance (36) en série entre une entrée et une sortie de ladite sixième ligne d'acheminement de signaux (6).

2. Procédé selon la revendication 1, dans lequel au moins l'une desdites première, deuxième, troisième et quatrième inductances comprend une valeur de 1 nh.

3. Procédé selon la revendication 1 ou 2, dans lequel au moins l'une desdites première, deuxième, troisième et quatrième capacités comprend une valeur de 0,5 pF.

4. Procédé selon l'une quelconque des revendications précédentes, dans lequel ladite étape de compensation de la télédiaphonie « FEXT » en faisant appel à une technique matérielle comprend l'étape consistant à fournir une inductance mutuelle entre la troisième ligne d'acheminement de signaux (3) et la cinquième ligne d'acheminement de signaux (5), et à fournir une inductance mutuelle entre la quatrième ligne d'acheminement de signaux (4) et la sixième ligne d'acheminement de signaux (6).

5. Procédé selon l'une quelconque des revendications précédentes,
dans lequel lesdites inductances comportent des inductances formées en tant que traces sur une carte de circuit imprimé.

6. Instrument d'essais (40) comprenant :
un connecteur (14) comprenant une première (1), une deuxième (2), une troisième (3), une quatrième (4), une cinquième (5), une sixième (6), une septième (7) et une huitième ligne d'acheminement de signaux (8) ; et
un circuit de compensation destiné à compenser une paradiaphonie « NEXT » en faisant appel à des techniques logicielles, **caractérisé en ce qu'**il comprend en outre :
un circuit de compensation destiné à compenser une télédiaphonie « FEXT » en faisant appel à une technique matérielle qui comprend :
une première capacité (22) connectée entre la première (1) et la troisième (3) desdites lignes d'acheminement de signaux (1 à 8) ;
une deuxième capacité (24) connectée entre la sixième (6) et la huitième (8) desdites lignes d'acheminement de signaux (1 à 8) ;
une troisième capacité (26) connectée entre la troisième (3) et la cinquième (5) desdites lignes d'acheminement de signaux (1 à 8) ;
une quatrième capacité (28) connectée entre la quatrième (4) et la sixième (6) desdites lignes d'acheminement de signaux (1 à 8) ;
une première inductance (30) en série entre une entrée et une sortie de ladite troisième ligne d'acheminement de signaux (3) ;
une deuxième inductance (32) en série entre une entrée et une sortie de ladite cinquième ligne d'acheminement de signaux (5) ;
une troisième inductance (34) en série entre une entrée et une sortie de ladite quatrième ligne d'acheminement de signaux (4) ; et
une quatrième inductance (36) en série entre une entrée et une sortie de ladite sixième ligne d'acheminement de signaux (6) ;
dans lequel la première inductance (30) et la deuxième inductance (32) sont fournies sous la forme d'une inductance mutuelle, et la troisième inductance (34) et la quatrième inductance (36) sont fournies sous la forme d'une inductance mutuelle.
